# EUROPÄISCHE PATENTSCHRIFT

(11) **EP 2 843 230 B1**
(45) Veröffentlichungstag und Bekanntmachung des Hinweises auf die Patenterteilung: **12.10.2016**
(21) Anmeldenummer: 14179556.7
(22) Anmeldetag: 01.08.2014
(51) Int. Cl.: F04B 1/14, F04B 1/20, F04B 53/18

(54) **Hydrostatische Axialkolbenmaschine**
Hydrostatic axial piston machine
Machine à piston axial hydrostatique

(30) Priorität: 05.08.2013 DE 102013108407
(43) Veröffentlichungstag der Anmeldung: 04.03.2015
(73) Patentinhaber: Linde Hydraulics GmbH & Co. KG, 63743 Aschaffenburg (DE)
(72) Erfinder: Bergmann, Martin, 64850 Schaafheim (DE)
(74) Vertreter: Geirhos, Johann

(56) Entgegenhaltungen:
- DE-A1-102009 051 674
- US-A- 2 570 698
- US-A1- 2003 206 811

## Beschreibung

Die Erfindung betrifft eine hydrostatische Axialkolbenmaschine mit einem Gehäuse, einer Triebwelle, die in dem Gehäuse mittels einer mindestens ein Wälzlager umfassenden Lagereinrichtung drehbar gelagert ist, und einer Zylindertrommel, die mit zumindest einer Kolbenausnehmung versehen ist, in der jeweils ein Kolben längsverschiebbar angeordnet ist.

Bei hydrostatischen Axialkolbenmaschinen ist in der Regel das Gehäuse, Innerhalb dessen die rotierende Triebwelle und die rotierende Zylindertrommel angeordnet ist, mit Druckmittel, beispielsweise Hydrauliköl, gefüllt, um eine Kühlung und Schmierung sicherzustellen. Im Betrieb der Axialkolbenmaschine bei drehender Triebwelle und drehender Zylindertrommel entstehen hierdurch Planschverluste, die mit steigender Drehzahl überproportional zunehmen. Diese Planschverluste stellen einen zusätzlichen Energieverbrauch dar, der bei einer als Pumpe ausgebildeten Axialkolbenmaschine vom Antrieb als unerwünschte Verlustleistung bereitgestellt werden muss bzw. bei einer als Motor ausgebildeten Axialkolbenmaschine nicht als Abtriebsleistung zur Verfügung steht. Insbesondere bei hohen Drehzahlen der rotierenden Bauteile kann diese Verlustleistung eine beträchtliche Größe annehmen, wodurch bei Axialkolbenmaschinen die Leistungsfähigkeit und die Einsatzfähigkeit zu hohen Drehzahlen hin beschränkt und eingeschränkt sind.

Um diese Nachteile zu vermeiden, ist es bereits bekannt, das Gehäuse einer hydrostatischen Axialkolbenmaschine von Druckmittel zu entleeren, um die durch das Planschen der rotierenden Bauteile verursachten Verluste zu verringern und die Effizienz der Axialkolbenmaschine bei höheren Drehzahlen zu steigern.

Bei einer hydrostatischen Axialkolbenmaschine mit einem ölentleerten Gehäuse ist jedoch für eine ausreichende Schmierung und Kühlung der Wälzlager der Lagereinrichtung der Triebwelle Sorge zu tragen. Um eine ausreichende Schmierung der Wälzlager der Triebwelle einer hydrostatischen Axialkolbenmaschine sicherzustellen, ist es bereits aus der DE 41 28 615 C1 und der DE 198 29 060 B4 bekannt, einen Schmiermittelkanal vorzusehen, der von Schmiermittel durchströmt ist und der durch alle Wälzlager der Lagereinrichtung der Triebwelle durchgeführt ist.

Um bei einem derartigen, durch die Wälzlager durchgeführten Schmiermittelkanal, eine gleichmäßige Schmierung der Wälzlager sicherzustellen, ist bei der DE 198 29 060 B4 an dem der Zylindertrommel zugewandten Wälzlager eine das Schmiermittel in dem Schmiermittelkanal aufstauende Rückstaueinrichtung vorgesehen. Bei der DE 198 29 060 B4 ist hierzu die Rückstaueinrichtung stromabwärts der Wälzlager der Lagereinrichtung in dem Schmiermittelkanal angeordnet. Das der Zylindertrommel zugewandte Wälzlager und der an dem Innenring dieses Wälzlagers angeordnete Axialbord, an dem die Wälzkörper dieses Wälzlagers mit ihrer Stirnseite anliegen, wird hierdurch mit dem bereits durch die Abwärme der beiden Wälzlager der Lagereinrichtung erwärmten Schmiermittel geschmiert und gekühlt, wodurch eine ausreichende Schmierung und Kühlung des Axialbordes an dem der Zylindertrommel zugewandte Wälzlager nicht sichergestellt ist.

Der vorliegenden Erfindung liegt die Aufgabe zugrunde, eine gattungsgemäße Axialkolbenmaschine mit einem druckmittelentleerten Gehäuse zur Verfügung zu stellen, bei der an dem Wälzlager eine verbesserte Schmierung und Kühlung im Bereich des Axialbordes des Innenrings des Wälzlagers zu den Stirnseiten der Wälzkörper des Wälzlagers hin erzielt wird.

Diese Aufgabe wird erfindungsgemäß dadurch gelöst, dass eine Sprühstrahlschmierung für das Wälzlager vorgesehen ist, die zumindest einen Schmiermittelsprühstrahl umfasst, der auf den Bereich eines Axialbordes eines Innenrings des Wälzlagers, an dem die Wälzkörper des Wälzlagers mit einer Stirnseite anliegen, gerichtet ist. An den Wälzlagern der Triebwelle einer Axialkolbenmaschine sind vor allem die Bereiche der Axialborde an den Innenringen, an denen die Wälzkörper des Wälzlagers mit den Stirnseiten anliegen, hinsichtlich der Schmierung und der Reibung kritisch, da zwischen den Axialborden an den Innenringen der Wälzlager und den Stirnseiten der Wälzlager hohe Reibung auftritt. Mit einer Sprühstrahlschmierung, die zumindest einen Schmiermittelsprühstrahl aufweist, der gezielt auf den Bereich des Axialbordes des Innenringes des Wälzlagers und den daran anliegenden Stirnseiten der Wälzkörper gerichtet ist, kann der tribologisch hoch belastetet Axialbord am Innenring des Wälzlagers mit einem gezielt auf diese Stelle gerichteten Schmiermittelsprühstrahl sicher und wirkungsvoll geschmiert und gekühlt werden. Bei einer Axialkolbenmaschine mit einem druckmittelentleerten Gehäuse kann somit eine ausreichende Schmierung und Kühlung der Wälzlager der Triebwelle an den tribologisch hoch belasteten Axialborden der Innenringe auf einfache Weise sichergestellt werden.

Besondere Vorteile ergeben sich, wenn gemäß einer Ausführungsform der Erfindung die Sprühstrahlschmierung an einem der rotierenden Zylindertrommel zugewandten Axialbord des Wälzlagers angeordnet ist. Bei Axialkolbenmaschinen treten insbesondere an dem der Zylindertrommel zugewandten Axialbord des Wälzlagers hohe Kräfte aufgrund der aufzunehmenden Axialkräfte der Axialkolbenmaschine auf. Mit einer Sprühstrahlschmierung kann an dieser Stelle des die Axiallast der Axialkolbenmaschine aufnehmenden Wälzlagers mit geringem Bauaufwand eine ausreichende Schmierung und Kühlung sichergestellt werden.

Besondere Vorteile ergeben sich, wenn gemäß einer Weiterbildung der Erfindung die Sprühstrahlschmierung über den Umfang des Innenrings des Wälzlagers mehrere auf den Axialbord des Innenrings des Wälzlagers gerichtete Schmiermittelsprühstrahlen aufweist. Hierdurch kann mit geringem Bauaufwand eine ausreichende Schmierung und Kühlung über den Umfang des Axialbords des Wälzlagers gewährleistet werden.

Die mehreren Schmiermittelsprühstrahlen können gemäß einer vorteilhaften Ausgestaltungsform der Erfindung über den Umfang gleichmäßig verteilt sein. Die Aufteilung der einzelnen Schmiermittelsprühstrahlen über den Umfang gesehen erfolgt somit zu gleichen Winkelgraden.

Gemäß einer alternativen, besonders vorteilhaften Ausgestaltungsform der Erfindung sind die mehreren Schmiermittelsprühstrahlen über den Umfang ungleichmäßig verteilt. Die Aufteilung der einzelnen Schmiermittelsprühstrahlen über den Umfang gesehen erfolgt somit zu verschiedenen Winkelgraden. Hierdurch wird ermöglicht, die Sprühstrahlschmierung an die Belastung des Wälzlagers anzupassen. Im Winkelbereichen mit einer höheren Belastung können die Schmiermittelsprühstrahlen enger zueinander angeordnet werden und in Bereichen mit einer geringeren Belastung eine weiter entfernte Anordnung der einzelnen Schmiermittelsprühstahlen erfolgen.

Besondere Vorteile ergeben sich, wenn gemäß einer Weiterbildung der Erfindung zur Erzeugung des Schmiermittelsprühstrahls eine auf den Axialbord des Innenrings des Wälzlagers gerichtete Bohrung vorgesehen ist, die mit einem Schmiermittelversorgungsanschluss des Gehäuses in Verbindung steht. Mit einer derartigen Bohrung kann mit geringem Bauaufwand ein auf den Axialbord des Innenrings des Wälzlagers und somit ein auf den tribologisch hoch belastete Stelle des Wälzlagers zwischen der Stirnseite der Wälzkörper und dem Axialbord des Innenrings des Wälzlagers zielgerichteter Schmiermittelsprühstrahl zur Schmierung und Kühlung erzeugt werden. Die direkte Verbindung der Bohrung mit einem Schmiermittelversorgungsanschluss des Gehäuses ermöglicht es, dass über die Bohrung ein Schmiermittelsprühstrahl mit kaltem Schmiermittel aus dem Schmiermittelversorgungsanschluss auf den Axialbord des Innenrings des Wälzlagers gerichtet ist, wodurch mit einer geringen Schmiermittelmenge eine effiziente Kühlung und Schmierung des Wälzlagers im Bereich der tribologisch hoch belasteten Stelle des Wälzlagers zwischen der Stirnseite der Wälzkörper und dem Axialbord am Innenring erzielt wird.

Die Bohrung kann gemäß einer bevorzugten Ausgestaltungsform der Erfindung einen kreisförmigen Querschnitt aufweist. Eine kreisförmige Bohrung erzeugt im Wesentlichen einen entsprechenden Schmiermittelsprühstrahl mit einem kreisförmigen Querschnitt.

Gemäß einer alternativen Ausgestaltungsform der Erfindung weist die Bohrung einen von der Kreisform abweichenden Querschnitt auf, insbesondere einen in Umfangsrichtung angeordneten langlochartigen Querschnitt. Mit einem von einer Kreisform abweichenden Querschnitt, beispielsweise einem in Umfangsrichtung ausgerichteten, langlochartigen oder nierenförmigen Querschnitt der Bohrung, kann ein Schmiermittelsprühstrahl mit einem fächerförmigen Querschnitt erzeugt werden, welcher an dem Axialbord des Innenrings einen vergrößerten Winkelbereich erfasst. Hierdurch können Vorteile hinsichtlich einer effektiven Kühlung und Schmierung des Axialbords am Innenring des Wälzlagers erzielt werden.

Hinsichtlich eines geringen Bauaufwandes für die Sprühstrahlschmierung ergeben sich Vorteile, wenn die Bohrung gemäß einer Ausführungsform der Erfindung in einer in dem Gehäuse angeordneten Ringbuchse angeordnet ist, die über einen Ringkanal eine Verbindung der Bohrung mit dem Schmiermittelversorgungsanschluss des Gehäuses ermöglicht. In einer Ringbuchse können die Bohrungen für die Sprühstrahlschmierung auf einfache und kostengünstige Weise hergestellt werden. Über einen Ringkanal können die einzelnen Bohrungen der Ringbuchse auf einfache Weise mit dem Schmiermittelversorgungsanschluss verbunden werden und das an dem Schmiermittelversorgungsanschluss anstehende Schmiermittel auf die einzelnen Bohrungen in der Ringbuchse verteilt werden.

Gemäß einer bevorzugten Ausführungsform der Erfindung ist die Lagereinrichtung mit einem durch die Lagereinrichtung hindurchführenden Schmiermittelkanal versehen. Bevorzugt ist die Schmierung der Lagereinrichtung mit dem durch die Lagereinrichtung hindurchführenden Schmiermittelkanal als Grundschmierung der Lagereinrichtung ausgebildet. Bei hohen Drehzahlen werden mit einer derartigen Schmierung im Wesentlichen die Außenringe der Wälzlager mit Schmiermittel benetzt. In Verbindung mit der erfindungsgemäßen Sprühstrahlschmierung an dem Axialbord des Innenrings des Wälzlagers kann somit ein Schmiermangel an dem Axialbord des Innenrings des Wälzlagers sicher vermieden werden.

Der Schmiermittelkanal ist vorzugsweise mit dem Schmiermittelversorgungsanschluss des Gehäuses verbunden.

Die erfindungsgemäße Axialkolbenmaschine kann als Schrägscheibenmaschine ausgebildet sein.

Alternativ kann die Axialkolbenmaschine als Schrägachsenmaschine ausgebildet sein. Bei einer Axialkolbenmaschine in Schrägachsenbauweise sind die Wälzlager der Triebwelle durch die hohen Axialkräfte aus den druckbeaufschlagten Kolben hoch belastet. Bei einer Axialkolbenmaschine in Schrägachsenbauweise ist besonders das der Zylindertrommel zugewandten und zur Zylindertrommel hin orientierten Wälzlager, das die hohen Axialkräfte aus den druckbeaufschlagten Kolben aufnimmt und die Axiallast trägt, hoch belastet. Mit der erfindungsgemäßen Sprühstrahlschmierung an dem der Zylindertrommel zugewandten Axialbord des Innenrings des der Zylindertrommel zugewandten Wälzlagers kann eine gezielte Schmierung und Kühlung der am höchsten beanspruchten Stelle der Wälzlagerung der Triebwelle erzielt werden.

Weitere Vorteile und Einzelheiten der Erfindung werden anhand der in den schematischen Figuren dargestellten Ausführungsbeispiele näher erläutert. Hierbei zeigt
- Figur 1: eine erfindungsgemäße Axialkolbenmaschine in einem Längsschnitt,
- Figur 2: einen Ausschnitt der Figur 1 in einer vergrößerten Darstellung und
- Figur 3: einen Ausschnitt der Figuren 1 und 2 in einer weiteren vergrößerten Darstellung.

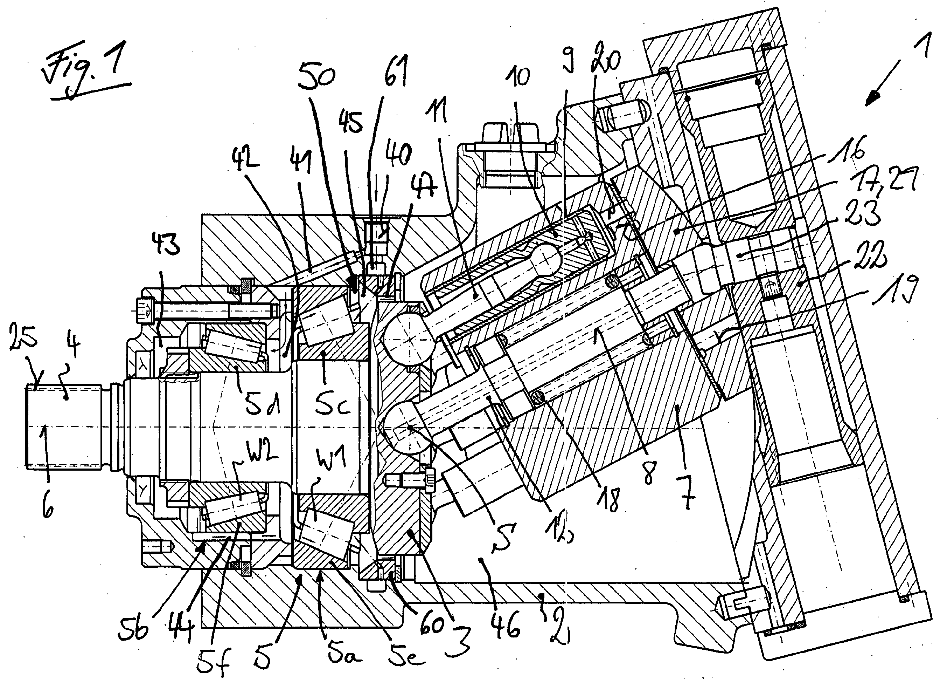

In den Figuren 1 bis 3 ist eine erfindungsgemäße hydrostatische Axialkolbenmaschine 1 in Schrägachsenbauweise in einem Längsschnitt dargestellt. Die Axialkolbenmaschine 1 weist eine Gehäuse 2 auf, in dem eine mit einem Triebflansch 3 versehene Triebwelle 4 mittels einer Lagereinrichtung 5 um eine Rotationsachse 6 drehbar gelagert ist.

Axial benachbart zu dem Triebflansch 6 ist eine Zylindertrommel 7 angeordnet, die mit mehreren konzentrisch zu einer Rotationsachse 8 der Zylindertrommel 7 angeordneten Kolbenausnehmungen 9 versehen ist, in denen jeweils ein Kolben 10 längsverschiebbar angeordnet ist.

Die Kolben 10 sind jeweils mittels einer Pleuelstange 11 mit dem Triebflansch 3 verbunden. Die Pleuelstange 11 ist sowohl an den Kolben 10 als auch an dem Triebflansch 3 jeweils mittels eines Kugelgelenks gelenkig gelagert. Die Zylindertrommel 7 ist an einem mit dem Treibflansch 6 durch ein Kugelgelenk gelenkig verbundenen Tragzapfen 12 abgestützt, wobei an dem Tragzapfen 12 weiterhin eine Feder 18 abgestützt ist, die die Zylindertrommel 7 an einem mit einer Steuerfläche 16 versehenen Steuerkörper 17 anpresst. Der Tragzapfen 12 ist konzentrisch zur Rotationsachse 8 der Zylindertrommel 7 angeordnet.

In der Steuerfläche 16 des Steuerkörpers 17 sind zur Steuerung der Zu- und Abfuhr von Druckmittel in den von den Kolbenausnehmungen 9 und den Kolben 10 gebildeten Verdrängerräumen nicht näher dargestellte nierenförmige Steuerausnehmungen ausgebildet, die einen Einlassanschluss 19 und einen Auslassanschluss der Axialkolbenmaschine 1 bilden. Zur Verbindung der von den Kolbenausnehmungen 9 und den Kolben 10 gebildeten Verdrängerräumen mit den in dem Steuerkörper 17 angeordneten Steuerausnehmungen ist die Zylindertrommel 7 an jeder Kolbenausnehmung 9 mit einer Steueröffnung 20 versehen.

Die in den Figuren 1 bis 3 dargestellte Axialkolbenmaschine 1 ist als Verstellmaschine mit einem veränderbaren Verdrängervolumen ausgebildet. Bei der Verstellmaschine ist der Neigungswinkel der Rotationsachse 8 der Zylindertrommel 7 bezüglich der Rotationsachse 6 der Triebwelle 4 zur Veränderung des Verdrängervolumens verstellbar. Der mit der Steuerfläche 16 versehene Steuerkörper 17 ist hierzu an einem Wiegenkörper 21 ausgebildet, der im Gehäuse 2 um eine Schwenkachse S verschwenkbar angeordnet ist. Die Schwenkachse S des Wiegenkörpers 21 und somit der Zylindertrommel 7 liegt auf dem Schnittpunkt S der Rotationsachse 6 der Triebwelle 4 und der Rotationsachse 8 der Zylindertrommel 7 und ist senkrecht zu den Rotationsachsen 6 und 8.

Zur Verstellung der Neigung des Wiegenkörpers 21 und somit der Zylindertrommel 7 ist eine von einem Stellkolben 22 gebildete Stelleinrichtung vorgesehen, die mit dem Wiegenkörper 21 in Wirkverbindung steht. Der Stellkolben 22 ist hierzu mit dem Verbindungszapfen 23 versehen, der mit dem Wiegenkörper 21 gelenkig verbunden ist.

In den Figuren 1 bis 3 ist die mit dem Triebflansch 3 versehene Triebwelle 4 mittels der Lagereinrichtung 5 fliegend in dem Gehäuse 2 gelagert. Die Lagereinrichtung 5 umfasst zwei Wälzlager 5a, 5b, die in axialer Richtung zwischen dem Triebflansch 3 und einem aus dem Gehäuse 2 herausragenden Wellenende der Triebwelle 4 angeordnet sind. An dem aus dem Gehäuse 2 herausragenden Wellenende ist die Triebwelle 4 mit einem Drehmomentübertragungsmittel 25, beispielsweise einer Keilverzahnung, versehen. Das Wälzlager 5a ist hierbei der Zylindertrommel 7 zugewandt angeordnet. Das Wälzlager 5b ist dem aus dem Gehäuse 2 herausragenden Wellenende der Triebwelle 4 zugewandt angeordnet.

Die Wälzlager 5a, 5b sind jeweils als Kegelrollenlager ausgebildet, die aus einem triebwellenseitigen Innenring 5c, 5d, einem gehäuseseitigen Außenring 5e, 5f und zwischen dem jeweiligen Innenring 5c, 5d und Außenring 5e, 5f angeordneten Wälzkörpern W1, W2 in Form von Kegelrollen bestehen.

Die Wälzlager 5a, 5b sind in einer sogenannten O-Anordnung angeordnet, bei denen die Wälzkörper W1, W2 der Wälzlager 5a, 5b gegenüber der Rotationsachse 6 der Triebwelle 4 nach innen bzw. außen geneigt sind.

Der Innenring 5c des zylindertrommelseitigen Wälzlagers 5a weist einen der Zylindertrommel 7 zugewandten Axialbord 30 auf, an dem die Wälzkörper W1 des Wälzlagers 5a mit einer Stirnseite 31 abgestützt sind.

Der Innenring 5d des wellenendseitigen Wälzlagers 5b weist einen dem Wellenende der Triebwelle 4 zugewandten Axialbord 32 auf, an dem die Wälzkörper W2 des Wälzlagers 5b mit einer Stirnseite 33 abgestützt sind.

Bei der erfindungsgemäßen Axialkolbenmaschine 1 ist das Gehäuse 2 von Druckmittel, beispielsweise Hydrauliköl, entleert, um Planschverluste der rotierenden Bauteile im Betrieb der Axialkolbenmaschine 1 zu vermeiden. Zur Schmierung und Kühlung der von den beiden Wälzlagern 5a, 5b gebildeten Lagereinrichtung 5 der Triebwelle 4 ist für Lagereinrichtung 5 eine Grundschmierung vorgesehen, die von einem durch die Lagereinrichtung 5 hindurchführenden Schmiermittelkanal gebildet ist. Der Schmiermittelkanal ist von einem Kanal 41, der von einem Schmiermittelversorgungsanschluss 40 am Gehäuse 1 zu einem Ringraum 42 zwischen den beiden Wälzlagern 5a, 5b geführt ist, einem wellenendseitigen Ringraum 43 am Wälzlager 5b, der über einen Rückführkanal 44 im vertikal unteren Bereich des Wälzlagers 5b mit dem Ringraum 42 verbunden ist, einem zylindertrommelseitigen Ringraum 45 zwischen dem Wälzlager 5a, dem Triebflansch 3 und dem Gehäuse 2, einer den Ringraum 45 mit dem Gehäuseinnenraum 46 verbindenden Abströmöffnung 47 und einem in den Figuren 1 bis 3 nicht näher dargestellten Schmiermittelauslass am Gehäuse 2 gebildet. Der Schmiermittelauslass ist bevorzugt an der vertikal tiefsten Stelle des Gehäuses 2 angeordnet.

Von dem mit dem Schmiermittelversorgungsanschluss 40 über den Kanal 41 verbundenen Ringraum 42 strömt hierbei Schmiermittel, beispielsweise Schmieröl, von dem mittigen Ringraum 42 über die Wälzkörper W2 des Wälzlagers 5b und den Rückführkanal 44 zurück in den Ringraum 42, wodurch der Schmiermittelkanal durch das Wälzlager 5b geführt ist. Von dem Ringraum 42 strömt das Schmiermittel ebenfalls über die Wälzkörper W1 des Wälzlagers 5a in den Ringraum 45 und über die Abströmöffnung 47 zu dem Gehäuseinnenraum 46 und somit dem Schmiermittelauslass, wodurch der Schmiermittelkanal durch das Wälzlager 5b geführt ist. Die Strömungsrichtung des Schmiermittels in dem Schmiermittelkanal 41-47 ist in den Figuren mit den Strömungspfeilen verdeutlicht. Bei hohen Drehzahlen der Axialkolbenmaschine 1 werden durch die Grundschmierung und den durch die Lagereinrichtung 5 hindurchführenden Schmiermittelkanal im Wesentlichen aufgrund der auftretenden Fliehkräfte die Außenringe 5e, 5f der Wälzlager 5a, 5b mit Schmiermittel benetzt. An den Axialborden 30, 32 der Innenringe 5c, 5d der Wälzlager 5a, 5b kann ein Schmiermangel auftreten.

Bei der in den Figuren 1 bis 3 dargestellten Axialkolbenmaschine in Schrägachsenbauweise werden die aus den druckbeaufschlagten Kolben 10 entstehenden Axialkräfte, die über die Pleuel 11 auf den Triebflansch 3 übertragen werden, maßgeblich von dem zylindertrommelseitigen Wälzlager 5a aufgenommen, das die Axiallast trägt. Die Axiallast wird im Wesentlichen durch die geneigt angeordneten Wälzkörper W1 getragen. Eine Kraftkomponente, die bei der Ausführung der Wälzkörper als Kegelrollen aus der kegeligen Form der Wälzkörper W1 resultiert, wird an dem der Zylindertrommel 7 zugewandten Axialbord 30 an dem Innenring 5c des Wälzlagers 5a abgestützt. Zwischen dem Axialbord 30 an dem Innenring 5c und den Stirnseiten 31 der Wälzkörper W1 des Wälzlagers 5a tritt eine hohe Reibung auf. Der Axialbord 30 an dem Innenring 5c des Wälzlagers 5a ist hierdurch tribologisch hoch belastet und bildet die am höchsten beanspruchte Stelle der Lagereinrichtung 5. Bei Schmiermittelmangel ist die Größe der an dem Axialbord 30 abgestüzten Kraftkomponente kritisch.

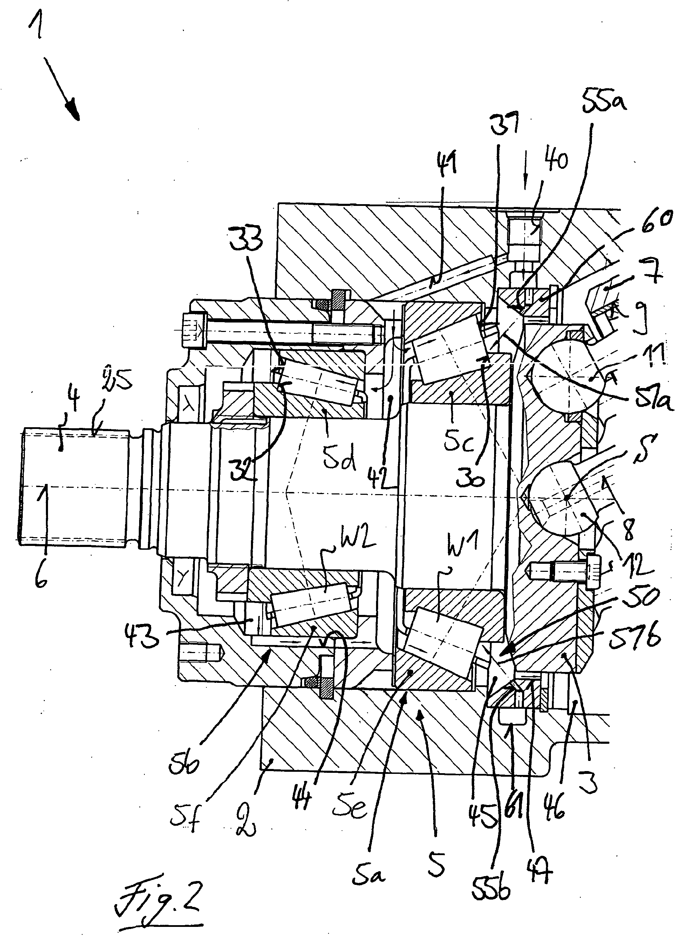

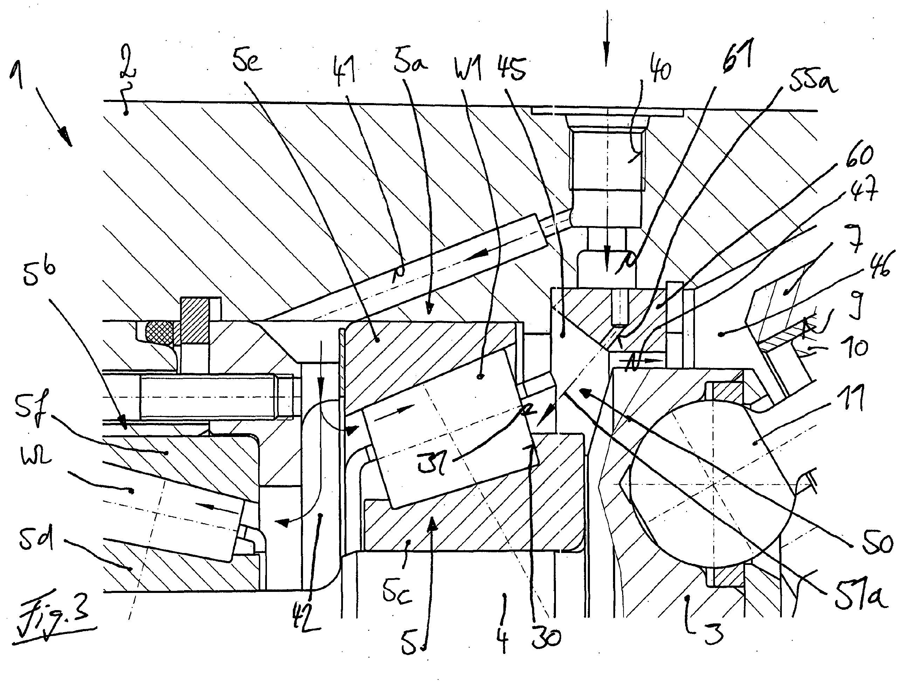

Um an dieser Stelle eine wirksame Schmierung und Kühlung sicherzustellen, ist zusätzlich zu der Grundschmierung durch den durch die Lagereinrichtung 5 hindurchführenden Schmiermittelkanal 41-47 eine Sprühstrahlschmierung 50 für das Wälzlager 5a vorgesehen ist. Die Sprühstrahlschmierung 50 umfasst - wie insbesondere in den Figuren 2 und 3 verdeutlicht ist - zumindest einen zielgerichteten Schmiermittelsprühstrahl 51a, 51b, der gezielt auf den Axialbord 30 des Innenringes 5c des Wälzlagers 5a gerichtet ist, an dem die Wälzkörper des Wälzlagers 5a mit der Stirnseite 31 anliegen, und somit gezielt auf und die tribologisch hoch belastete Stelle zwischen den Stirnseiten 31 der Wälzkörper W1 und dem der Zylindertrommel 7 zugewandten Axialbord 30 am Innenring 5c des Wälzlagers 5a gerichtet ist.

Bevorzugt umfasst die Sprühstrahlschmierung 50 mehrere über den Umfang des Axialbords 30 verteilt angeordnete Schmiermittelsprühstrahlen 51a, 51b, um eine ausreichende Schmierung und Kühlung des Axialbords 30 sicherzustellen. In den Figuren 1 bis 3 sind lediglich zwei Schmiermittelsprühstrahlen 51 a, 51 b dargestellt, die in der dargestellten Schnittebene liegen. Es versteht sich, dass noch weitere Schmiermittelsprühstrahlen vorgesehen sein können. Die Aufteilung der Schmiermittelsprühstrahlen 51 a, 51 b über den Umfang kann hierbei zu gleichen Winkelgraden erfolgen. Alternativ ist es möglich, in Winkelbereichen, in denen höhere Belastungen an dem Axialbord 30 auftreten, die Schmiermittelsprühstrahlen 51 a, 51 b in Umfangsrichtung enger zueinander anzuordnen und in Winkelbereichen, in denen geringere Belastungen an dem Axialbord 30 auftreten, die Schmiermittelsprühstrahlen 51a, 51b weiter voneinander in Umfangsrichtung anzuordnen.

Zum Erzeugen der einzelnen Schmiermittelsprühstrahlen 51a, 51b ist jeweils eine mit Schmiermittel druckbeaufschlagte Bohrung 55a, 55b im Gehäuse 2 angeordnet, die geneigt und somit schräg zur Rotationsachse 6 der Triebwelle 4 angeordnet ist. Die Bohrungen 55a, 55b sind hierbei zu dem Axialbord 30 am Innenring 5c des Wälzlagers 5a geneigt und auf die Stelle zwischen den Stirnseiten 31 der Wälzkörper W1 und dem Axialbord 30 am Innenring 5c ausgerichtet. Die aus den jeweiligen Bohrungen 55a, 55b austretenden Schmiermittelsprühstrahlen 51 a, 51 b sind somit von den gehäuseseitigen Bohrungen 55a, 55b nach radial Innen auf den Axialbord 30 gerichtet, wodurch eine gezielte Schmierung und Kühlung des Axialbords 30 am Innenring 5c zwischen den Stirnseiten 31 der Wälzkörper W1 und dem Axialbord 30 und eine ausreichende Versorgung dieser Stelle mit Schmiermittel durch die einzelnen Schmiermittelsprühstrahlen 51 a, 51 b erfolgt.

Die Bohrungen 55a, 55b sind an den Schmiermitteleinlass 40 angeschlossen. Die Bohrungen 55a, 55b der Sprühstrahlschmierung 50 sind hierbei zu dem durch die Lagereinrichtung 5 hindurchführenden Schmiermittelkanal 41-47 der Grundschmierung in einer Parallelschaltung an den Schmiermittelversorgungsanschluss 40 angeschlossen, so dass über die Bohrungen 55a, 55b gekühltes Schmiermittel, beispielsweise Schmieröl aus einem Behälter, an den Axialbord 30 gesprüht wird.

Die Bohrungen 55a, 55b sind in einer Ringbuchse 60 angeordnet, die im Gehäuse 2 befestigt ist. Die Verbindung der Bohrungen 55a, 55b mit dem Schmiermitteleinlass 40 und die Aufteilung des Schmiermittels auf die einzelnen Bohrungen 55a, 55b erfolgt mittels eines Ringkanals 61, der mit dem Schmiermittelversorgungsanschluss 40 in Verbindung steht. Der Ringkanal 61 ist im dargestellten Ausführungsbeispiel im Gehäuse 2 ausgebildet. Es versteht sich, dass alternativ der Ringkanal 61 am Außenumfang der Ringbuchse 60 ausgebildet werden kann.

Die Ringbuchse 60 ist im Bereich des Triebflansches 3 angeordnet. Zwischen dem Innendurchmesser der Ringbuchse 60 und dem Außendurchmesser des Triebflansches 3 ist ein Ringspalt ausgebildet, der die Abströmöffnung 47 des sich durch die Lagereinrichtung 5 hindurchführenden Schmiermittelkanal 41-47 bildet.

Die Bohrungen 55a, 55b können einen kreisförmigen Querschnitt aufweisen, wobei die mittels der Bohrungen 55a, 55b Schmiermittelsprühstrahlen 51 a, 51 b mit einem im Wesentlichen kreisförmigen Querschnitt aufweisen.

Um Schmiermittelsprühstrahlen 51 a, 51 b mit einem aufgefächerten und fächerförmigen Querschnitt zu erzielen, der an dem Axialbord 30 einen vergrößerten Winkelbereich mit Schmiermittel besprüht, können alternativ die Bohrungen 55a, 55b mit einem von einer Kreisform abweichenden Querschnitt, beispielsweise einem in Umfangsrichtung langlochartigen bzw. nierenförmigen Querschnitt versehen werden.

Die erfindungsgemäße Axialkolbenmaschine 1 weist eine Reihe von Vorteile auf. Die Sprühstrahlschmierung 50 mit der auf die Stelle zwischen den Stirnseiten 31 der Wälzkörper W1 und dem Axialbord 30 des Wälzlagers 5a gerichteten Schmiermittelsprühstrahlen 51a, 51b ermöglicht eine ausreichende Versorgung des Wälzlagers 5a mit Schmiermittel und eine gezielte Schmierung der am höchst belasteten Stellen der aus den beiden Wälzlagern 5a, 5b gebildeten Lagereinrichtung 5. Hierdurch wird ein Betrieb der Axialkolbenmaschine 1 mit einem druckmittelentleerten Gehäuse 2e ermöglicht, um die Planschverluste der rotierenden Zylindertrommel zu vermeiden. Durch die Sprühstrahlschmierung 50 auf den Axialbord 30 des Wälzlagers 5a kann zudem der Schmiermittelvolumenstrom über den durch die Lagereinrichtung 5 hindurchführenden Schmiermittelkanal 41-47 verringert werden, wodurch die Planschverluste der Wälzlager 5a, 5b verringert werden können.

Die Erfindung ist nicht auf das dargestellte Ausführungsbeispiel beschränkt. Alternativ oder zusätzlich zu der Sprühstrahlschmierung 50 an dem der Zylindertrommel 7 zugewandten Axialbord 30 des der Zylindertrommel 7 zugewandten Wälzlagers 5a kann eine Sprühstrahlschmierung 50 an dem Axialbord 32 des dem aus dem Gehäuse 2 herausragenden Wellenende der Triebwelle 4 zugewandten Wälzlagers 5b vorgesehen werden.

Die erfindungsgemäße Axialkolbenmaschine 1 kann hierbei als Pumpe oder als Motor ausgebildet sein.

Die Axialkolbenmaschine 1 kann alternativ zu der Ausgestaltungsform als Verstellmaschine als Konstantmaschine mit einem festen Verdrängervolumen ausgebildet sein.

Zudem kann mit der erfindungsgemäßen Sprühstrahlschmierung 50 bei einer Axialkolbenmaschine in Schrägscheibenbauweise mit einem druckmittelentleerten Gehäuse eine effektive und wirksame Kühlung sowie Schmierung der Axialborde der die Triebwelle und die Zylindertrommel im Gehäuse lagernden Wälzlager erzielt werden.

## Patentansprüche

1. Hydrostatische Axialkolbenmaschine (1) mit einem Gehäuse (2), einer Triebwelle (4), die in dem Gehäuse (2) mittels einer mindestens ein Wälzlager (5a; 5b) umfassenden Lagereinrichtung (5) drehbar gelagert ist, und einer Zylindertrommel (7), die mit zumindest einer Kolbenausnehmung (8) versehen ist, in der jeweils ein Kolben (10) längsverschiebbar angeordnet ist, **dadurch gekennzeichnet, dass** eine Sprühstrahlschmierung (50) für das Wälzlager (5a; 5b) vorgesehen ist, die zumindest einen Schmiermittelsprühstrahl (51a; 51b) umfasst, der auf den Bereich eines Axialbordes (30; 32) eines Innenrings (5c; 5d) des Wälzlagers (5a; 5b), an dem die Wälzkörper des Wälzlagers (5a; 5b) mit einer Stirnseite anliegen, gerichtet ist.

2. Hydrostatische Axialkolbenmaschine nach Anspruch 1, **dadurch gekennzeichnet, dass** die Sprühstrahlschmierung (50) an einem der rotierenden Zylindertrommel (7) zugewandten Axialbord (30) des Wälzlagers (5a) angeordnet ist.

3. Hydrostatische Axialkolbenmaschine nach Anspruch 1 oder 2, **dadurch gekennzeichnet, dass** die Sprühstrahlschmierung (50) über den Umfang des Innenrings (5c; 5d) des Wälzlagers (5a; 5b) mehrere auf den Axialbord (30; 32) des Innenrings (5c; 5d) des Wälzlagers (5a; 5b) gerichtete Schmiermittelsprühstrahlen (51a, 51b) aufweist.

4. Hydrostatische Axialkolbenmaschine nach Anspruch 3, **dadurch gekennzeichnet, dass** die Schmiermittelsprühstrahlen (51a, 51b) über den Umfang gleichmäßig verteilt sind.

5. Hydrostatische Axialkolbenmaschine nach Anspruch 3, **dadurch gekennzeichnet, dass** die Schmiermittelsprühstrahlen (51a, 51b) über den Umfang ungleichmäßig verteilt sind.

6. Hydrostatische Axialkolbenmaschine nach einem der Ansprüche 1 bis 5, **dadurch gekennzeichnet, dass** zur Erzeugung des Schmiermittelsprühstrahls (51a; 51b) eine auf den Axialbord (30; 32) des Innenrings (5c; 5d) des Wälzlagers (5a; 5b) gerichtete Bohrung (55a; 55b) vorgesehen ist, die mit einem Schmiermittelversorgungsanschluss (40) des Gehäuses (2) in Verbindung steht.

7. Hydrostatische Axialkolbenmaschine nach Anspruch 6, **dadurch gekennzeichnet, dass** die Bohrung (55a; 55b) einen kreisförmigen Querschnitt aufweist.

8. Hydrostatische Axialkolbenmaschine nach Anspruch 6, **dadurch gekennzeichnet, dass** die Bohrung (55a; 55b) einen von der Kreisform abweichenden Querschnitt aufweist, insbesondere einen in Umfangsrichtung angeordneten langlochartigen Querschnitt.

9. Hydrostatische Axialkolbenmaschine nach einem der Ansprüche 6 bis 8, **dadurch gekennzeichnet, dass** die Rohrung (55a; 55b) in einer in dem Gehäuse (2) angeordneten Ringbuchse (60) angeordnet ist, die über einen Ringkanal (61) eine Verbindung der Bohrung (55a; 55b) mit dem Schmiermittelversorgungsanschluss (40) des Gehäuses (2) ermöglicht.

10. Hydrostatische Axialkolbenmaschine nach einem der Ansprüche 1 bis 9, **dadurch gekennzeichnet, dass** die Lagereinrichtung (5) mit einem durch die Lagereinrichtung (5) hindurchführenden Schmiermittelkanal (41, 42, 43, 44, 45, 46, 47) versehen ist.

11. Hydrostatische Axialkolbenmaschine nach Anspruch 10, **dadurch gekennzeichnet, dass** der Schmiermittelkanal (41, 42, 43, 44, 45, 46, 47) mit dem Schmiermittelversorgungsanschluss (40) des Gehäuses (2) verbunden ist.

12. Hydrostatische Axialkolbenmaschine nach einem der Ansprüche 1 bis 11, **dadurch gekennzeichnet, dass** die Axialkolbenmaschine (1) als Schrägscheibenmaschine ausgebildet ist.

13. Hydrostatische Axialkolbenmaschine nach einem der Ansprüche 1 bis 11, **dadurch gekennzeichnet, dass** die Axialkolbenmaschine (1) als Schrägachsenmaschine ausgebildet ist.

## Claims

1. Hydrostatic axial piston machine (1) having a housing (2), a drive shaft (4) which is mounted rotatably in the housing (2) by means of a bearing device (5) which comprises at least one roller bearing (5a; 5b), and a cylinder barrel (7) which is provided with at least one piston recess (8), in which in each case one piston (10) is arranged longitudinally displaceably, **characterized in that** a spray jet lubrication means (50) is provided for the roller bearing (5a; 5b), which spray jet lubrication means (50) comprises at least one lubricant spray jet (51a; 51b) which is directed onto that region of an axial rim (30; 32) of an inner ring (5c; 5d) of the roller bearing (5a; 5b), against which the rolling bodies of the roller bearing (5a, 5b) bear with an end side.

2. Hydrostatic axial piston machine according to Claim 1, **characterized in that** the spray jet lubrication means (50) is arranged on an axial rim (30) of the roller bearing (5a), which axial rim (30) faces the rotating cylinder barrel (7).

3. Hydrostatic axial piston machine according to Claim 1 or 2, **characterized in that**, over the circumference of the inner ring (5c; 5d) of the roller bearing (5a; 5b), the spray jet lubrication means (50) has a plurality of lubricant spray jets (51a, 51b) which are directed onto the axial rim (30; 32) of the inner ring (5c; 5d) of the roller bearing (5a; 5b).

4. Hydrostatic axial piston machine according to Claim 3, **characterized in that** the lubricant spray jets (51a, 51b) are distributed uniformly over the circumference.

5. Hydrostatic axial piston machine according to Claim 3, **characterized in that** the lubricant spray jets (51a, 51b) are distributed non-uniformly over the circumference.

6. Hydrostatic axial piston machine according to one of Claims 1 to 5, **characterized in that** a bore (55a; 55b) which is directed onto the axial rim (30; 32) of the inner ring (5c; 5d) of the roller bearing (5a; 5b) and is connected to a lubricant supply connector (40) of the housing (2) is provided in order to produce the lubricant spray jet (51a; 51b).

7. Hydrostatic axial piston machine according to Claim 6, **characterized in that** the bore (55a; 55b) has a circular cross section.

8. Hydrostatic axial piston machine according to Claim 6, **characterized in that** the bore (55a; 55b) has a cross section which differs from the circular shape, in particular a slot-like cross section which is arranged in the circumferential direction.

9. Hydrostatic axial piston machine according to one of Claims 6 to 8, **characterized in that** the bore (55a; 55b) is arranged in an annular bush (60) which is arranged in the housing (2) and, via an annular duct (61), makes a connection of the bore (55a; 55b) to the lubricant supply connector (40) of the housing (2) possible.

10. Hydrostatic axial piston machine according to one of Claims 1 to 9, **characterized in that** the bearing device (5) is provided with a lubricant duct (41, 42, 43, 44, 45, 46, 47) which leads through the bearing device (5).

11. Hydrostatic axial piston machine according to Claim 10, **characterized in that** the lubricant duct (41, 42, 43, 44, 45, 46, 47) is connected to the lubricant supply connector (40) of the housing (2).

12. Hydrostatic axial piston machine according to one of Claims 1 to 11, **characterized in that** the axial piston machine (1) is configured as a swash plate machine.

13. Hydrostatic axial piston machine according to one of Claims 1 to 11, **characterized in that** the axial piston machine (1) is configured as a bent axis machine.

## Revendications

1. Machine à piston axial hydrostatique (1) comprenant un boîtier (2), un arbre d'entraînement (4) qui est supporté à rotation dans le boîtier (2) au moyen d'un dispositif de palier (5) comprenant au moins un palier à roulement (5a ; 5b), et un tambour de cylindre (7) qui est pourvu d'au moins un logement de piston (8) dans lequel est disposé à chaque fois un piston (10) pouvant être déplacé longitudinalement, **caractérisée en ce qu'**une lubrification par jet de pulvérisation (50) est prévue pour le palier à roulement (5a ; 5b), laquelle comprend au moins un jet de pulvérisation de lubrifiant (51a ; 51b) qui est orienté vers la région d'un bord axial (30 ; 32) d'une bague interne (5c ; 5d) du palier à roulement (5a ; 5b), au niveau duquel s'appliquent les corps de roulement du palier à roulement (5a ; 5b) avec un côté frontal.

2. Machine à piston axial hydrostatique selon la revendication 1, **caractérisée en ce que** la lubrification par jet de pulvérisation (50) est disposée au niveau d'un bord axial (30) du palier à roulement (5a) tourné vers le tambour de cylindre rotatif (7).

3. Machine à piston axial hydrostatique selon la revendication 1 ou 2, **caractérisée en ce que** la lubrification par jet de pulvérisation (50) présente, sur la périphérie de la bague interne (5c ; 5d) du palier à roulement (5a ; 5b), plusieurs jets de pulvérisation de lubrifiant (51a, 51b) orientés vers le bord axial (30 ; 32) de la bague interne (5c ; 5d) du palier à roulement (5a ; 5b).

4. Machine à piston axial hydrostatique selon la revendication 3, **caractérisée en ce que** les jets de pulvérisation de lubrifiant (51a, 51b) sont répartis uniformément sur la périphérie.

5. Machine à piston axial hydrostatique selon la revendication 3, **caractérisée en ce que** les jets de pulvérisation de lubrifiant (51a, 51b) sont répartis de manière non uniforme sur la périphérie.

6. Machine à piston axial hydrostatique selon l'une quelconque des revendications 1 à 5, **caractérisée en ce que** pour générer le jet de pulvérisation de lubrifiant (51a ; 51b), il est prévu un alésage (55a ; 55b) orienté vers le bord axial (30 ; 32) de la bague interne (5c ; 5d) du palier à roulement (5a ; 5b), alésage qui est en liaison avec un raccord d'alimentation en lubrifiant (40) du boîtier (2).

7. Machine à piston axial hydrostatique selon la revendication 6, **caractérisée en ce que** l'alésage (55a ; 55b) présente une section transversale de forme circulaire.

8. Machine à piston axial hydrostatique selon la revendication 6, **caractérisée en ce que** l'alésage (55a ; 55b) présente une section transversale s'écartant de la forme circulaire, en particulier une section transversale de type trou oblong disposée dans la direction périphérique.

9. Machine à piston axial hydrostatique selon l'une quelconque des revendications 6 à 8, **caractérisée en ce que** l'alésage (55a ; 55b) est disposé dans une douille annulaire (60) disposée dans le boîtier (2), qui permet, par le biais d'un canal annulaire (61), une connexion de l'alésage (55a ; 55b) au raccord d'alimentation en lubrifiant (40) du boîtier (2).

10. Machine à piston axial hydrostatique selon l'une quelconque des revendications 1 à 9, **caractérisée en ce que** le dispositif de palier (5) est pourvu d'un canal de lubrifiant (41, 42, 43, 44, 45, 46, 47) conduisant à travers le dispositif de palier (5).

11. Machine à piston axial hydrostatique selon la revendication 10, **caractérisée en ce que** le canal de lubrifiant (41, 42, 43, 44, 45, 46, 47) est connecté au raccord d'alimentation en lubrifiant (40) du boîtier (2).

12. Machine à piston axial hydrostatique selon l'une quelconque des revendications 1 à 11, **caractérisée en ce que** la machine à piston axial (1) est réalisée sous forme de machine à disque en nutation.

13. Machine à piston axial hydrostatique selon l'une quelconque des revendications 1 à 11, **caractérisée en ce que** la machine à piston axial (1) est réalisée sous forme de machine à axe oblique.
